# EUROPEAN PATENT APPLICATION

(11) **EP 4 838 594 A1**
(43) Date of publication of application: **11.11.2026**
(21) Application number: 25219580.5
(22) Date of filing: 28.11.2025
(51) Int. Cl.: H01M 8/249, H01M 8/04089, H01M 8/04119

(54) **ANODE SUBSYSTEM AND FUEL CELL SYSTEM**

(30) Priority: 06.05.2025 CN 202510573338
(71) Applicant: FTXT Energy Technology Co., Ltd., Suzhou Jiangsu 215537 (CN)
(72) Inventor: BACH, Peter James, Suzhou, 215537 (CN); MOHR, Philipp, Suzhou, 215537 (CN)
(74) Representative: Murgitroyd & Company

(57) **Abstract**

An anode subsystem of the present invention is used for supplying a fuel gas to a cascaded stack, and includes a gas supply pipeline connected in series between anode sides of each stage of stacks of the cascaded stack and a recirculation unit disposed on an anode side of a final stage stack of the cascaded stack. The recirculation unit is configured to receive a tail gas discharged from an exhaust port on the anode side of the final stage stack and supply the tail gas to an intake port on the anode side of the final stage stack after treating the tail gas. The anode subsystem of the present invention is equipped with the recirculation unit for the final stage stack of the cascaded stack, thereby realizing the integration of the cascaded stack and an anode recirculation loop.

## Description

### TECHNICAL FIELD

The present invention relates to the field of fuel cell technologies, and in particular, to an anode subsystem applied to a cascaded stack and a fuel cell system.

### BACKGROUND

A stoichiometric ratio of a fuel of a fuel cell stack refers to a molar ratio of reactants to products calculated according to a chemical reaction stoichiometric equation, and its value is greater than 1. This indicator is used for describing a ratio of a supply amount of a reaction gas to an actual consumption amount thereof, which has a significant impact on the performance of a cell. If the stoichiometric ratio is too large, it will cause waste of the reaction gas and may exacerbate a membrane dehydration state of the cell.

To reduce a value of the stoichiometric ratio, in the conventional technology, usually a fuel cell is generally equipped with a recirculation system of a fuel gas. A volume of the fuel gas during a recirculation process of the fuel gas typically accounts for 20% to 50% of a total volume of a gas at an inlet, which requires a large and expensive recirculation device to achieve effective recirculation and reuse.

To avoid the high investment in a fuel gas recirculation system, in the conventional technology, there is a solution that fuel cell stacks are cascaded into multiple stages. In an anode subsystem of a multi-stage cascaded stack composed of a plurality of stacks connected in series, the anode subsystem is used for supplying the fuel gas (such as hydrogen) to an anode side of each stage of the stacks. The fuel gas flows through each stage of the stacks sequentially via a main pipeline, and reacts with a combustion-supporting gas entering from a cathode side of the stacks inside the stacks to reduce the overall stoichiometric ratio of the fuel of a set of the cells. However, there is still a situation where the stoichiometric ratio of the fuel is relatively high in some local area of each stage of the stacks.

However, the cascaded stack needs to maintain a low nitrogen content in an anode gas of each stage of the stacks to avoid an excessive high anode pressure drop across the set of the cells. An increase in the nitrogen content in the anode gas will dilute a concentration of reactive gases such as hydrogen participating in the reaction, so a diffusion resistance of the hydrogen to a surface of an anode catalyst that is increased, then hindering a mass transfer process, thereby leading to an increase in the anode pressure drop, and thus a reaction rate of the stacks is decreased.

However, as each stage of the stacks consumes the hydrogen in the anode gas, if the nitrogen content in the anode gas of the stack at the last section of the cascaded stack remains at a low level, it will inevitably reduce a utilization rate of the fuel gas, thereby limiting the effectiveness of reducing the overall stoichiometric ratio of the fuel of the set of the cells.

### SUMMARY

In view of this, the present invention aims to propose an anode subsystem to improve a utilization rate of a fuel gas of a fuel cell while reducing the adverse impact of an increased anode pressure drop on an overall stack system.

To achieve the above objective, according to a first aspect, embodiments of the present invention provide an anode subsystem for supplying a fuel gas to a cascaded stack, and the anode subsystem includes a gas supply pipeline and a recirculation unit. The gas supply pipeline is connected in series between anode sides of each stack of stacks of the cascaded stack. The recirculation unit is disposed on an anode side of a final stage stack of the cascaded stack, and is configured to receive a tail gas discharged from an exhaust port on the anode side of the final stage stack, and supply the tail gas to an intake port on the anode side of the final stage stack after treating the tail gas.

In some embodiments, the gas supply pipeline includes a main pipeline connected between a fuel gas source and a first stage stack of the cascaded stack and a plurality of cascade pipelines respectively connected between adjacent stages of the stacks, and a flow control valve is disposed on the main pipeline.

In some embodiments, the recirculation unit includes a tail gas recirculation pipeline connected between the exhaust port and the intake port and a gas-liquid separator and a circulation driving device sequentially arranged along a flow direction of the tail gas on the tail gas recirculation pipeline.

In some embodiments, the circulation driving device adopts a circulation pump.

In some embodiments, the circulation driving device adopts an ejector, the gas supply pipeline is connected to a jet nozzle of the ejector, the tail gas recirculation pipeline is connected to a flow guide port of the ejector, and a gas outlet of the ejector is connected to the intake port.

In some embodiments, a drain pipeline is provided at a bottom of the gas-liquid separator.

In some embodiments, a drain valve is disposed on the drain pipeline.

Compared with the conventional technologies, according to the anode subsystem provided in the present invention, in a case that a stack system adopts a cascaded stack architecture, the final stage stack at the last section of the cascaded stack is equipped with a recirculation unit in the anode subsystem, so that the cascaded stack and a an anode recirculation loop are integrated, thereby effectively improving a utilization rate of a fuel gas, and thus reducing an overall stoichiometric ratio of a fuel of the cascaded stack. As the recirculation unit is provided only for the final stage stack with a small-scale, which may achieve miniaturization and compactness of the recirculation device, thereby reducing investment. A nitrogen content in a recirculated fuel gas at the final stage stack will increase significantly, thereby reducing a fuel purge loss. Moreover, the increase in an anode pressure drop caused by the increase of the nitrogen content only affects the final stage stack at the end section, thus reducing the adverse impact of the increased anode pressure drop on the overall stack system.

By disposing a flow control valve on a main pipeline between a first stage stack and a fuel gas source in a gas supply pipeline, a flow rate of the fuel gas supplied to the cascaded stack may be controlled in real time to keep a supply amount of the fuel gas at a reasonable level, thereby improving a reaction efficiency of the cascaded stack and a utilization efficiency of the fuel gas.

By configuring a circulation driving device and a gas-liquid separator for the recirculation unit, the circulation driving device may perform dewatering treatment on a tail gas discharged from the final stage stack to separate the liquid from the tail gas. The dewatered tail gas is then supplied to the final stage stack through the gas-liquid separator, which is beneficial for improving the effectiveness of recirculation of the tail gas.

The circulation driving device adopts a circulation pump, which has the advantages of strong pumping capacity and stable operating performance; or the circulation driving device adopts an ejector, which has no energy consumption and may utilize a pressure of the fuel gas supplied by a cascaded pipeline to achieve the recirculation of the tail gas.

Another objective of the present invention is to propose a fuel cell system, including a plurality of stages of the stack connected in series and the anode subsystem described in the present invention.

In some embodiments, the fuel cell system also includes a cathode subsystem for supplying a combustion-supporting gas to each stage of the stacks. The cathode subsystem includes a cathode module communicating with a cathode side of the stacks, and the cathode module is provided with a humidifier for humidifying the combustion-supporting gas.

In some embodiments, the cathode module includes an intake pipeline connected between a combustion-supporting gas source and an intake port on the cathode side of the stacks and an exhaust pipeline connected to an exhaust port on the cathode side of the stacks, and the humidifier is disposed on the intake pipeline. The exhaust pipeline passes through the humidifier to transfer waste heat in the tail gas discharged from the cathode side of the stacks to the humidifier.

In some embodiments, an intake isolation valve is disposed on the intake pipeline (300), and an exhaust isolation valve is disposed on the exhaust pipeline.

In some embodiments, the stacks include membrane electrode assemblies and bipolar plates respectively disposed on a cathode side and an anode side of the membrane electrode assembly. The bipolar plate on the anode side of the stacks is provided with anode flow channels for the fuel gas to flow through, and a pressure loss of the anode flow channel in the final stage stack is less than a pressure loss of the anode flow channel of any other stage of the stacks.

In some embodiments, the anode flow channel of the final stage stack adopts a parallel flow channel, and the anode flow channel of any other stage of the stacks adopts a serpentine flow channel.

In some embodiments a flow cross-sectional area of the anode flow channel of the final stage stack is greater than a flow cross-sectional area of the anode flow channel of any other stage the stacks.

In some embodiments, a reverse tolerance catalyst is added to the membrane electrode assembly of the final stage stack.

Compared with the conventional technologies, the cascaded stack of the present invention has the technical advantages of the aforementioned anode subsystem.

Moreover, a cathode module of the cathode subsystem is provided with a humidifier which is configured to perform humidification treatment on a combustion-supporting gas, so that the stack is provided with the combustion-supporting gas having a properly humidity to effectively improve an electrochemical reaction efficiency of the stack, thereby improving the gas diffusion effect in the stack, and thus reducing an internal resistance of cells. Therefore, and thereby a service life of the cells is prolonged. By utilizing waste heat carried by a tail gas discharged from an exhaust pipeline of the stack to heat the humidifier, thermal energy is fully utilized, thereby reducing the energy consumption of the cathode module.

In addition, when an anode side of the final stage stack utilizes the recirculated tail gas provided by a recirculation unit, it will encounter situations such as a high nitrogen content and an increased anode pressure drop. By adaptively improving an anode flow channel of a bipolar plate on the anode side of the final stage stack, a pressure loss of the anode flow channel is reduced, thereby effectively mitigating the impact of the increased anode pressure drop on the final stage stack, and thus improving the reaction effectiveness of the recirculated tail gas in the final stage stack. By adding a reverse tolerance catalyst to the membrane electrode assembly of the final stage stack, the poor reaction effect caused by the high nitrogen content in the fuel gas used in the final stage stack is improved.

### BRIEF DESCRIPTION OF THE DRAWINGS

The drawings, which constitute a portion of the present invention, are provided to facilitate further understanding the present invention. The schematic embodiments of the present invention and description thereof are used for explaining the present invention. The directional terms such as front, rear, upper, and down are used only for indicating relative positional relationships, and do not constitute any improper limitation on the present invention. In the drawings:
FIG. 1 is a schematic diagram of an overall system configuration of a fuel cell system according to an embodiment of the present invention.
FIG. 2 is a schematic diagram of an overall system configuration of a fuel cell system when using a circulation driving device with another form in a recirculation unit according to an embodiment of the present invention.
FIG. 3 is a schematic diagram of a system configuration of a cathode module according to an embodiment of the present invention.
FIG. 4 is a schematic structural diagram of a bipolar plate with a parallel flow channel according to an embodiment of the present invention.
FIG. 5 is a schematic structural diagram of a bipolar plate with a serpentine flow channel according to an embodiment of the present invention.
FIG. 6 is a schematic cross-sectional structural diagram of an anode flow channel of a bipolar plate according to an embodiment of the present invention.

Reference numerals:
1. fuel gas source; 10. main pipeline; 100. cascaded pipeline; 11. flow control valve;
20. bipolar plate; 200. anode flow channel; 201. parallel flow channel; 202. serpentine flow channel; 21. membrane electrode assembly; 2a. first stage stack; 2b. second stage stack; 2n. final stage stack;
3. cathode module; 30. combustion-supporting gas source; 300. intake pipeline; 301. exhaust pipeline; 31. air filter; 32. air compressor; 33. intercooler; 34. humidifier; 35. intake isolation valve; 36. exhaust isolation valve;
4. recirculation unit; 40. tail gas recirculation pipeline; 41. gas-liquid separator; 42. circulation driving device; 43. drain valve; 430. drain pipeline.

### DETAILED DESCRIPTION OF THE EMBODIMENTS

It should be noted that, embodiments in the present invention and features in the embodiments may be combined with each other without conflict.

In the description of the present invention, it should be declared that, when terms indicating directional or positional relationships such as "upper, down, left, right, front, rear, inside, outside" and so on appear, they indicate the directional or positional relationships based on the directional or positional relationships shown in the accompanying drawings, and are only for the convenience of describing the present invention, rather than indicating or implying that the referred device or element must have a specific orientation, or be constructed or operated in a specific orientation. Therefore, they should not be understood as a limitation to the present invention.

In addition, in the description of the present invention, unless explicitly defined otherwise, the terms "installation", "connected", "connection", "connector" should be understood in a broad sense. For example, the connection may be a fixed connection, a detachable connection, or an integrated connection; it may be a mechanical connection or an electrical connection; or it may be directly connected or indirectly connected through an intermediate medium, or it may be the internal connection between two elements. For those with ordinary skill in the art, the specific meanings of the above terms in the present invention may be understood with reference to specific situations.

The present invention will be described in detail below with reference to the drawings and embodiments.

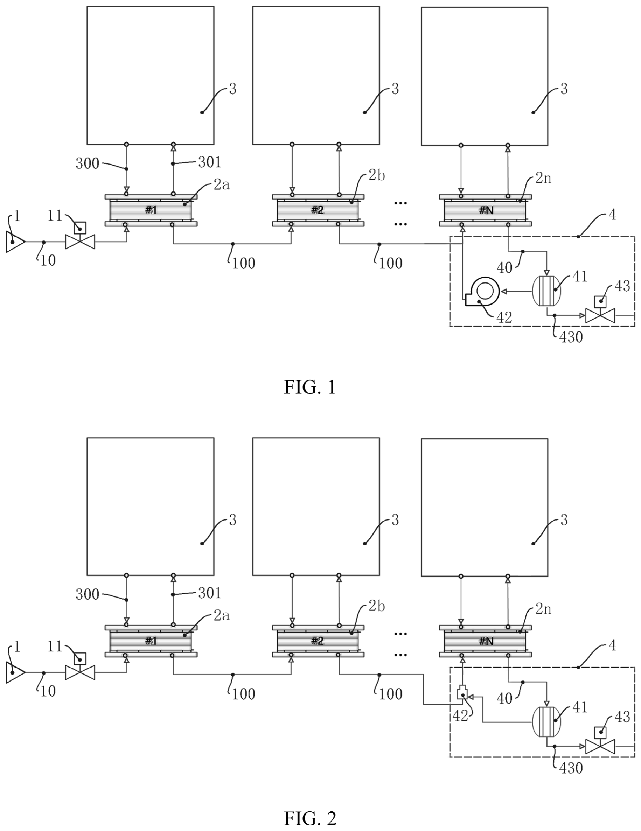

An embodiment relates to an anode subsystem for supplying a fuel gas to a cascaded stack, which may improve a utilization rate of a fuel cell while reducing the adverse effects of an increased anode pressure drop on the overall stack system. An exemplary system configuration of the cascaded stack where the anode subsystem is located is shown in FIG. 1 or FIG. 2.

Generally speaking, the anode subsystem includes a gas supply pipeline and a recirculation unit 4. The gas supply pipeline is connected in series between anode sides of each stage of stacks of the cascaded stack. The recirculation unit 4 is disposed on an anode side of a final stage stack 2n of the cascaded stack, and is configured to receive a tail gas discharged from an exhaust port on the anode side of the final stage stack 2n and supply the tail gas to an intake port on the anode side of the final stage stack 2n after treating the tail gas.

It should be pointed out that, based on the overall design concept above, the technical solution of the present invention may be implemented in a variety of specific structural forms, configurations, or sequencing. For example, the final stage stack 2n at the last section may may refer to the rearmost stack in the cascaded stack, or may be several stacks at the last section of the cascaded stack. The recirculation unit 4, while realizing the recirculation of a tail gas for the final stage stack 2n, may be configured to perform various treatment measures on the tail gas, such as temperature regulation, separation and dehumidification, or discharging the tail gas to the external environment when a hydrogen content in the tail gas reaches a preset lower limit index.

The specific arrangement sequence and assembly methods of each stage of the stacks, the gas supply pipeline, and the recirculation unit 4 in the system may also be flexibly adjusted. For the parts required for the implementation of the overall solution but not involved in the above general configuration, reasonable and flexible design may be made with reference to mature configuration methods in the field and actual situations during implementation.

The specific implementation solution described below in the present embodiment is only the preferable one of the many solutions that may be formed by the above various combinations and their modifications. In an actual implementation, those skilled in the art may make flexible adjustments and improvements with reference to the actual situations. Obviously, the numerous solutions that may be formed by the above various specific forms of combinations and their modifications, as well as the solution of the specific implementation of the present embodiment, shill all fall within the protection scope of the present invention.

Specifically, as shown in FIG. 1, the gas supply pipeline of the present embodiment includes a main pipeline 10 connected between a fuel gas source 1 and a first stage stack 2a of the cascaded stack and a plurality of cascade pipelines 100 respectively connected between adjacent stages of the stacks.

Specifically, as shown in FIG. 1 or FIG. 2, the stacks at all stages connected in series includes a first stage stack 2a (denoted as #1), a second stage stack 2b (denoted as #2), ..., and arranged sequentially up to the final stage stack 2n (denoted as #N) at the last section of the cascaded stack. The cascaded pipelines 100 are connected between adjacent stacks, specifically between the adjacent first stage stack 2a and the second stage stack 2b, as well as between all subsequent adjacent stacks. A front end of the cascaded pipeline 100 is connected to an exhaust port of an upstream stack, and a rear end of the cascaded pipeline 100 is connected to an intake port of a downstream stack, thereby allowing the fuel gas to flow through each stage of the stacks in sequence.

The specific number of the stacks in the overall cascaded stack may be reasonably set as required, and the stacks may be numbered as #1, #2, #3, ... #N, and so on. The stack numbered #1 is the first stage stack 2a, the stack numbered #2 is the second stage stack 2b, the stack numbered #3 is a third stage stack, and so on, until the final stage stack 2n numbered #N at the end.

Meanwhile, in some embodiments, a flow control valve 11 is disposed on the main pipeline 10. By disposing the flow control valve 11 on the main pipeline 10 between the first stage stack 2a and the fuel gas source 1 in the gas supply pipeline, a flow rate of the fuel gas supplied to the cascade stack is controlled in real time, so that a supply amount of the fuel gas is maintained at a reasonable level, thereby improving a reaction efficiency of the cascade stack and a utilization efficiency of the fuel gas.

As shown in FIG. 1 or FIG. 2, the recirculation unit 4 in the present embodiment includes a tail gas recirculation pipeline 40 connected between the exhaust port and the intake port, a gas-liquid separator 41 and a circulation driving device 42 sequentially arranged on the tail gas recirculation pipeline 40 along a flow direction of the tail gas. The recirculation unit 4 is equipped with the circulation driving device 42 and the gas-liquid separator 41, so that the circulation driving device 42 may perform dewatering treatment on the tail gas discharged from the final stage stack 2n to separate the liquid from the tail gas. The dewatered tail gas is then supplied to the final stage stack 2n through the gas-liquid separator 41, which is beneficial for improving the effectiveness of recirculation and reuse of the tail gas.

Regarding specific arrangements in the recirculation unit 4, a variety of different structural solutions are available. In the present embodiment, as shown in FIG. 1, the circulation driving device 42 in the recirculation unit 4 adopts a circulation pump. The circulation pump adopts the circulation driving device 42, thereby having advantages of strong pumping capacity and stable operating performance. Alternatively, as shown in FIG. 2, the circulation driving device 42 adopts an ejector. The gas supply pipeline between the final stage stack 2n and its adjacent stack is connected to a jet nozzle of the ejector, the tail gas recirculation pipeline 40 is connected to a flow guide port of the ejector, and a gas outlet of the ejector is connected to the intake port of the final stage stack 2n. When the ejector is adopted as the circulation driving device 42, there is no energy consumption, and the recirculation of the tail gas is achieved by utilizing a pressure of the fuel gas supplied by the cascade pipelines 100.

Additionally, a drain pipeline 430 is provided at a bottom of the gas-liquid separator 41, and a drain valve 43 is disposed on the drain pipeline 430. Water separated from the tail gas by the gas-liquid separator 41 is discharged to the outside through the drain pipeline 430 at an appropriate time.

In summary, according to the anode subsystem of the present embodiment, in a case that a fuel cell system using a cascade stack architecture, in the anode subsystem, the final stage stack 2n of the cascade stack is configured with the recirculation unit 4, thereby realizing integration of the cascade stack and an anode recirculation loop. Therefore, a utilization rate of the fuel gas is effectively improved, and thus an overall stoichiometric ratio of a fuel of the cascaded stack is reduced.

At the same time, the recirculation unit 4 is provided only for the final stage stack 2n with a small-scale, which may achieve miniaturization and compactness of the recirculation device, thereby reducing investment. A nitrogen content in a recirculated fuel gas at the final stage stack 2n will increase significantly, thereby reducing a fuel purge loss. Moreover, the increase in an anode pressure drop caused by the increase of the nitrogen content only affects the final stage stack 2n at the end section, thus reducing the adverse impact of the increased anode pressure drop on the overall stack system.

The embodiments of the present invention also provide a fuel cell system including a plurality of stages of stacks connected in series and in a cascade stack architecture. The fuel cell system also includes the anode subsystem provided in the Embodiment 1. An exemplary system configuration of the fuel cell system is shown in FIG. 1 or FIG. 2.

Certainly, the fuel cell system may be constructed through internal or external cascading of the stacks. The external cascading is achieved by connecting the stacks via the gas supply pipelines, while the internal cascading is achieved by encapsulating the gas supply pipelines into an internal structure of the stacks. By configuring the anode subsystem of the present invention for the fuel cell system with the cascade stack architecture, the fuel cell system will have the technical advantages of the aforementioned anode subsystem.

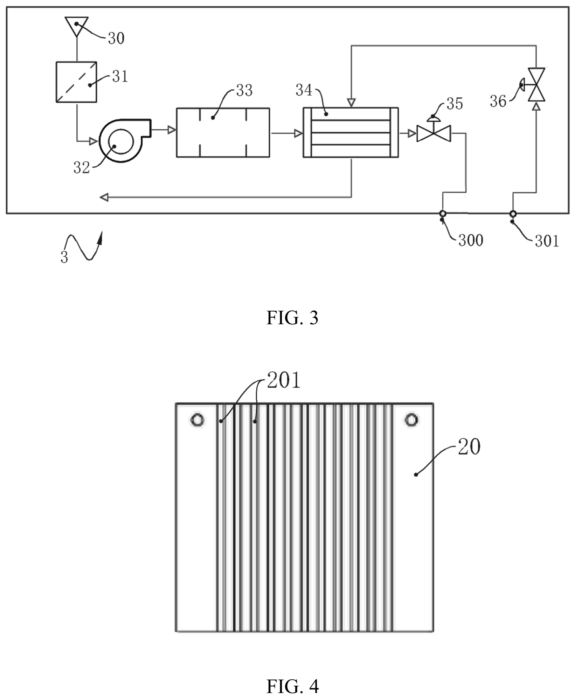

In addition, as shown in FIG. 1 and FIG. 3, the fuel cell system in the present embodiment also includes a cathode subsystem for supplying a combustion-supporting gas to each stage of stacks. The cathode subsystem includes a cathode module 3 communicating with a cathode side of the stacks, and the cathode module 3 is provided with a humidifier 34 for humidifying the aforementioned combustion-supporting gas. By providing the humidifier 34 in the cathode module 3 of the cathode subsystem, the humidification treatment may be performed on the combustion-supporting gas, so that the stacks are provided with the combustion-supporting gas having a properly humidity to effectively improve the electrochemical reaction efficiency of the stacks, thereby improving a gas diffusion effect in the stacks, and thus reducing an internal resistance of cells. Therefore, a service life of the cells is prolonged.

For the specific configuration of the cathode module 3, there may be various different options. For example, a plurality of the cathode modules 3 may be provided corresponding to each stage of the stacks, respectively. Alternatively, one cathode module 3 may be provided to uniformly supply the combustion-supporting gas to the cathode side of each stage of the stacks simultaneously. Specifically, the cathode module 3 in the present embodiment includes an intake pipeline 300 connected between a combustion-supporting gas source 30 and an intake port on the cathode side of the stacks, and an exhaust pipeline 301 connected to an exhaust port on the cathode side of the stacks. The humidifier 34 is disposed on the intake pipeline 300, and the exhaust pipeline 301 passes through the humidifier 34 to transfer waste heat in the tail gas discharged from the cathode side of the stacks to the humidifier 34.

In addition, an air filter 31, an air compressor 32, an intercooler 33, and the humidifier 34 are sequentially disposed on the intake pipeline 300 of the present embodiment. The combustion-supporting gas source 30 may be air, and the air filter 31 will effectively purify the air to prevent dust from entering the stacks. The air compressor 32 may provide a sufficient air source pressure to supply the stacks with a sufficient flow rate of the combustion-supporting gas. The intercooler 33 may effectively reduce a temperature of the combustion-supporting gas to control the combustion-supporting gas being in a temperature range suitable for stack reaction. The humidifier 34 requires energy to heat for humidifying the combustion-supporting gas. By using the waste heat carried by the tail gas discharged from the exhaust pipeline 301 of the stacks to heat the humidifier 34, the full utilization of heat energy is achieved, thereby reducing the energy consumption of the cathode module 3.

In addition, an intake isolation valve 35 may be disposed on the intake pipeline 300 and an exhaust isolation valve 36 may be disposed on the exhaust pipeline 301, to prevent reverse flow of the airflow in the intake pipeline 300 and the exhaust pipeline 301, thereby providing a unidirectional shut-off function.

In order to balance the utilization rate of the fuel gas of the fuel cells with mitigating the adverse effects of an increased anode pressure drop on the overall stack system, besides the rational design of the above-mentioned anode subsystem and the cathode subsystem, based on that the stack includes a membrane electrode assembly 21 and the bipolar plates 20 are respectively disposed on the cathode and anode sides of the membrane electrode assembly 21, the anode flow channel 200 provided in the bipolar plate 20 on the anode side of the stack, which is used for the fuel gas to flow through, may be optimized.

Specifically, in the fuel cell system of the present embodiment, a pressure loss of the anode flow channel 200 in the final stage stack 2n is less than a pressure loss of the anode flow channel 200 of any other stage of the stacks. For the anode side of the final stage stack 2n, while using the recirculated tail gas provided by the recirculation unit 4, it will experience a high nitrogen content and an increased anode pressure drop. By adaptively improving the anode flow channel 200 of the bipolar plate 20 on the anode side of the final stage stack 2n, the pressure loss of the anode flow channel 200 is reduced, so that the impact of the increased anode pressure drop on the final stage stack 2n is effectively mitigated, and thus improving the reaction effectiveness of the recirculated tail gas in the final stage stack 2n.

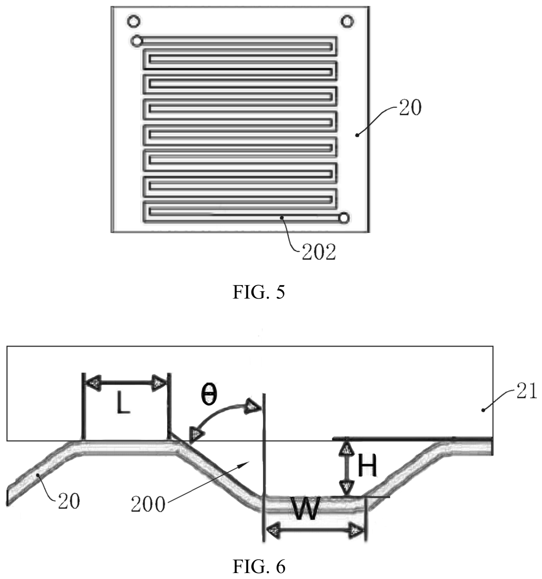

Certainly, there are many different structural solutions and implementation methods for the differential design of the anode flow channels 200 of the final stage stack 2n and the other stacks. In the present embodiment, the anode flow channel 200 of the final stage stack 2n adopts a parallel flow channel 201 as shown in FIG. 4, and the anode flow channel 200 of any other stage of the stacks adopts a serpentine flow channel 202 as shown in FIG. 5.

The anode flow channel 200 of the final stage stack 2n adopts the straight parallel flow channel 201, which is simple in structure, so that it is easy to process and construct, thereby effectively reducing the pressure loss level of the anode flow channel 200 of the final stage stack 2n, and thus increasing the flow rate of the recirculated tail gas in the anode flow channel 200, which is adapting to the condition with a high nitrogen content and a low hydrogen content in the tail gas. The anode flow channel 200 of any other stage of the stacks adopts the circuitous serpentine flow channel 202, so that the pressure loss of the anode flow channel 200 of the corresponding stacks is increased, and thus reducing the flow rate of the fuel gas in the anode flow channel 200, which is adapting to the condition with a low nitrogen content and a high hydrogen content in the fuel gas therein. The anode flow channels 200 for the final stage stack and any other stack adopt different pressure loss structure design, thereby effectively improving the overall utilization level of the fuel gas of the fuel cell system, and thus improving the overall stoichiometric ratio of the fuel of the fuel cell system.

In addition, flow cross-sectional areas of the anode flow channels 200 may be differentially designed, such that a flow cross-sectional area of the anode flow channel 200 of the final stage stack 2n is greater than a flow cross-sectional area of the anode flow channel 200 of any other stage of the stacks. As shown in FIG. 6, the flow cross-sectional area of the anode flow channel 200 is accurately changed by adjusting a width W and a depth H of the anode flow channel 200, and an inclination angle θ of a side wall of the anode flow channel 200 relative to a stack longitudinal direction (which is perpendicular to a direction of the bipolar plate 20).

At the same time, by changing an interval dimension L between two adjacent anode flow channels 200, an arrangement density of the anode flow channels 200 is changed, thereby adjusting the arrangement number of the anode flow channels 200. The above methods may achieve the purpose of changing the pressure loss level of the gas passing through the anode flow channel 200, thereby realizing the differentiated design of the structures of the anode flow channels 200 for the final stage stack 2n and other stacks. The anode flow channel 200 of the final stage stack 2n is designed as a flow structure with a lower pressure loss well, thereby effectively adapting to the situation that there are the high nitrogen content and the low hydrogen content in the recirculated tail gas at this location.

In addition, the membrane electrode assemblies 21 in the stacks may be differentially configured for the final stage stack 2n and any other stacks. For example, a reverse tolerance catalyst, an oxygen evolution reaction (OER) catalyst may be added to the membrane electrode assembly 21 of the final stage stack 2n. By adding the reverse tolerance catalyst, the OER catalyst to the membrane electrode assembly 21 of the final stage stack 2n, the poor reaction effect caused by the high nitrogen content in the fuel gas used in the final stage stack 2n is improved.

The above-mentioned reverse tolerance catalyst is a type of catalysts with a special function in electrochemical devices such as a fuel cell. The reverse tolerance catalyst generally has a special electronic structure and chemical composition, enabling it to promote the corresponding electrochemical reactions during reverse polarity events. Taking a proton exchange membrane fuel cell as an example, an anode catalyst promotes an oxidation reaction of the hydrogen, and a cathode catalyst promotes a reduction reaction of oxygen during normal operation. When the reverse polarity event occurs, the reverse tolerance catalyst is capable of promoting the oxygen reduction reaction on an original anode (which becomes a cathode at this time) or promoting the hydrogen oxidation reaction on an original cathode (which becomes an anode at this time), thereby maintaining a basic function of the cell, and thus avoiding severe corrosion of electrode materials and a sharp decline in a cell performance due to the reverse polarity event.

During operation of a fuel cell, the reverse polarity event may occur. For example, when a potential of an electrode in the fuel cell is reversed due to various reasons (such as gas supply interruption, uneven local current distribution, and so on), an original cathode may become an anode, and an original anode may become a cathode, which may cause severe damage to the performance and service life of the cell. The reverse tolerance catalyst is designed to address this issue. It is capable of maintaining a certain level of catalytic activity and stability under the reverse polarity condition, so that the negative impacts of the reverse polarity event on the cell are reduced, thereby protecting the cell electrodes and other components, and thus the service life of the fuel cell is prolonged.

The OER catalyst is also known as an oxygen evolution reaction catalyst, which is used for promoting the oxygen evolution process in electrochemical reactions. In an energy conversion and storage system, such as a fuel cell, a water electrolysis device, and a metal-air battery, the OER is a critical half-reaction. Since the OER process involves the transfer of four electrons, the reaction kinetic is relatively slow. Therefore, a highly efficient catalyst is required to reduce the activation energy of the reaction, thereby accelerating the reaction rate.

In summary, according to the fuel cell system of the present invention, by adopting the aforementioned anode subsystem and the cathode subsystem, and simultaneously optimizing the design of the anode flow channel 200 and the membrane electrode assembly 21 at the final stage stack 2n to achieve the recycling of the tail gas with a low hydrogen content at the final stage stack 2n, the utilization level of the fuel gas of the fuel cell system is significantly improved, and a favorable overall anode pressure drop condition of the fuel cell system is maintained, thereby effectively balancing the dual requirements of improving the utilization rate of the fuel gas and reducing the adverse effects of the increased anode pressure drop for the fuel cell system. Consequently, the utilization rate of the fuel gas of the fuel cell is improved while reducing the adverse impact of the increased anode pressure drop on the overall stack system.

The above descriptions are only preferred embodiments of the present invention. The detailed explanations of the configurations, the examples of specific structural arrangements, or the descriptions of assembly and connection methods, are all provided for the purpose of sufficient disclosure to enable those skilled in the art to better implement the present invention, and are not intended to limit the protection scope of the present invention. Any modifications, equivalent substitutions, improvements, and so on, made within the principles of the present invention, should be included within the protection scope of the present invention.

## Claims

1. An anode subsystem for supplying a fuel gas to a cascaded stack, comprising:
a gas supply pipeline and a recirculation unit (4), wherein
the gas supply pipeline is connected in series between anode sides of each stage of stacks of the cascaded stack; and
the recirculation unit (4) is disposed on an anode side of a final stage stack (2n) of the cascaded stack, and is configured to receive a tail gas discharged from an exhaust port on the anode side of the final stage stack (2n) and supply the tail gas to an intake port on the anode side of the final stage stack (2n) after treating the tail gas.

2. The anode subsystem according to claim 1, wherein
the gas supply pipeline comprises a main pipeline (10) connected between a fuel gas source (1) and a first stage stack (2a) of the cascaded stack, and a plurality of cascade pipelines (100) respectively connected between adjacent stages of the stacks, and a flow control valve (11) is disposed on the main pipeline (10).

3. The anode subsystem according to claim 1 or claim 2, wherein the recirculation unit (4) comprises a tail gas recirculation pipeline (40) connected between the exhaust port and the intake port, and a gas-liquid separator (41) and a circulation driving device (42) sequentially arranged along a flow direction of the tail gas on the tail gas recirculation pipeline (40).

4. The anode subsystem according to claim 3, wherein
the circulation driving device (42) adopts a circulation pump.

5. The anode subsystem according to claim 3, wherein the circulation driving device (42) adopts an ejector, the gas supply pipeline is connected to a jet nozzle of the ejector, the tail gas recirculation pipeline (40) is connected to a flow guide port of the ejector, and a gas outlet of the ejector is connected to the intake port.

6. The anode subsystem according to any one of claims 3 to 5, wherein a drain pipeline (430) is provided at a bottom of the gas-liquid separator (41).

7. The anode subsystem according to any one of claim 6, wherein a drain valve (43) is disposed on the drain pipeline (430).

8. A fuel cell system, comprising:
a plurality of stages of the stacks connected in series and
the anode subsystem according to any one of claims 1 to 7.

9. The fuel cell system according to claim 8, further comprising:
a cathode subsystem for supplying a combustion-supporting gas to each stage of the stacks, wherein
the cathode subsystem comprises a cathode module (3) communicating with a cathode side of the stacks, and the cathode module (3) is provided with a humidifier (34) for humidifying the combustion-supporting gas.

10. The fuel cell system according to claim 9, wherein the cathode module (3) comprises an intake pipeline (300) connected between a combustion-supporting gas source (30) and an intake port on the cathode side of the stacks, and an exhaust pipeline (301) connected to an exhaust port on the cathode side of the stacks, and the humidifier (34) is disposed on the intake pipeline (300); and
the exhaust pipeline (301) passes through the humidifier (34) to transfer waste heat in the tail gas discharged from the cathode side of the stacks to the humidifier (34).

11. The fuel cell system according to claim10, wherein an intake isolation valve (35) is disposed on the intake pipeline (300), and an exhaust isolation valve (36) is disposed on the exhaust pipeline (301).

12. The fuel cell system according to any one of claims 8 to 11, wherein the stacks comprise membrane electrode assemblies (21), and bipolar plates (20) respectively disposed on a cathode side and an anode side of the membrane electrode assembly (21); and
the bipolar plate (20) on the anode side of the stacks is provided with anode flow channels (200) for the fuel gas to flow through, and a pressure loss of the anode flow channel (200) in the final stage stack (2n) is less than a pressure loss of the anode flow channel (200) of any other stage of the stacks.

13. The fuel cell system according to claim 12, wherein:
the anode flow channel (200) of the final stage stack (2n) adopts a parallel flow channel (201), and the anode flow channel (200) of any other stage of the stacks adopts a serpentine flow channel (202).

14. The fuel cell system according to claim 12 or claim 13, wherein a flow cross-sectional area of the anode flow channel (200) of the final stage stack (2n) is greater than a flow cross-sectional area of the anode flow channel (200) of any other stage of the stacks.

15. The fuel cell system according to any one of claims 8 to 14, wherein a reverse tolerance catalyst is added to the membrane electrode assembly (21) of the final stage stack (2n).
